# EUROPÄISCHE PATENTANMELDUNG

(11) **EP 1 526 043 A1**
(43) Veröffentlichungstag der Anmeldung: **27.04.2005**
(21) Anmeldenummer: 04022741.5
(22) Anmeldetag: 24.09.2004
(51) Int. Cl.: B60R 21/13, B60R 21/34

(54) **Aktuatoreinrichtung und Sicherheitseinrichtung für ein Kraftfahrzeug**

(30) Priorität: 22.10.2003 DE 10349547
(71) Anmelder: Brose Schliesssysteme GmbH & Co. KG, 42369 Wuppertal (DE)
(72) Erfinder: Kachouch, Checrallah, 44227 Dortmund (DE); Bartel, Peter, 45529 Hattingen (DE)
(74) Vertreter: Gesthuysen, von Rohr & Eggert

(57) **Zusammenfassung**

Es werden eine Aktuatoreinrichtung und eine Sicherheitseinrichtung für ein Kraftfahrzeug vorgeschlagen, wobei die Sicherheitseinrichtung mittels eines Aktuators (3) auslösbar ist. Um die Funktionsfähigkeit des Aktuators (3) zu überprüfen, wird ein Funktionstest des Aktuators durchgeführt, wobei der Aktuator vorzugsweise entgegen der Auslöserichtung (5) betrieben wird.

## Beschreibung

Die vorliegende Erfindung betrifft eine Aktuatoreinrichtung gemäß dem Oberbegriff des Anspruchs 1, eine Sicherheitseinrichtung gemäß dem Oberbegriff des Anspruchs 24 sowie ein Verfahren gemäß dem Oberbegriff des Anspruchs 30.

Die DE 100 38 431 A1, die den Ausgangspunkt der vorliegenden Erfindung bildet, offenbart einen Kraftverschluß für eine Kraftfahrzeugsicherheitseinrichtung. Aus der Praxis sind diverse Sicherheitseinrichtungen für Kraftfahrzeuge bekannt, welche insbesondere bei einem Unfall eine Verletzung von an dem Unfall beteiligen Personen verhindern oder die Schwere der Verletzungen begrenzen sollen, beispielsweise Überrollbügel, Kopfstützen, Kniepolster, verlagerbare Motorhauben, verlagerbare Lenkräder oder dgl. Die Sicherheitseinrichtungen werden insbesondere bei einem Unfall mechanisch in ihre stützende Position gebracht, wobei die dafür erforderliche Kraft bzw. Energie insbesondere durch mechanische oder pneumatische Federn zur Verfügung gestellt wird. Vor einem Unfall werden die Sicherheitseinrichtungen von sogenannten Kraftverschlüssen in einem gespannten Funktionszustand gehalten, wobei hohe Kräfte zu halten sind. Problematisch ist, daß ein derartiger Kraftverschluß oftmals für eine lange Zeit oder nie ausgelöst wird, eine Auslösung jedoch im Notfall, insbesondere bei einem Unfall, noch funktionieren soll.

Der vorliegenden Erfindung liegt die Aufgabe zugrunde, eine insbesondere als Kraftverschluß einsetzbare Aktuatoreinrichtung, eine Sicherheitseinrichtung für ein Kraftfahrzeug und ein Verfahren zur Überprüfung der Funktionsfähigkeit eines Aktuators einer Aktuatoreinrichtung anzugeben, so daß eine sichere Auslösung der Sicherheitseinrichtung gewährleistet werden kann.

Die obige Aufgabe wird durch eine Aktuatoreinrichtung gemäß Anspruch 1, eine Sicherheitseinrichtung gemäß Anspruch 24 oder ein Verfahren gemäß Anspruch 30 gelöst. Vorteilhafte Weiterbildungen sind Gegenstand der Unteransprüche.

Eine grundlegende Idee der vorliegenden Erfindung liegt darin, einen Aktuator zur Auslösung einer Sicherheitseinrichtung zur Überprüfung seiner Funktionsfähigkeit ohne Auslösung der Sicherheitseinrichtung zu betreiben bzw. betätigen. So kann überprüft und sichergestellt werden, daß der für eine Auslösung der Sicherheitseinrichtung maßgebliche Aktuator tatsächlich funktioniert. Dies erhöht dementsprechend die Sicherheit bei einem Unfall, da dementsprechend eine wesentliche Voraussetzung für das Funktionieren der Sicherheitseinrichtung erfüllt ist.

Vorzugsweise wir der Aktuator beim Funktionstest entgegen der Auslöserichtung betrieben und anschließend, insbesondere mittels Federkraft wieder in seine Ausgangslage zurückgestellt. Dies gestattet eine sehr einfache Realisierung.

Der Funktionstest wird vorzugsweise regelmäßig, insbesondere selbsttätig, durchgeführt. Bei einem Versagen des Funktionstests kann dann umgehend eine Reparatur der Aktuatoreinrichtung erfolgen, so daß die Ausfallwahrscheinlichkeit bei einem Unfall zumindest wesentlich reduziert ist.

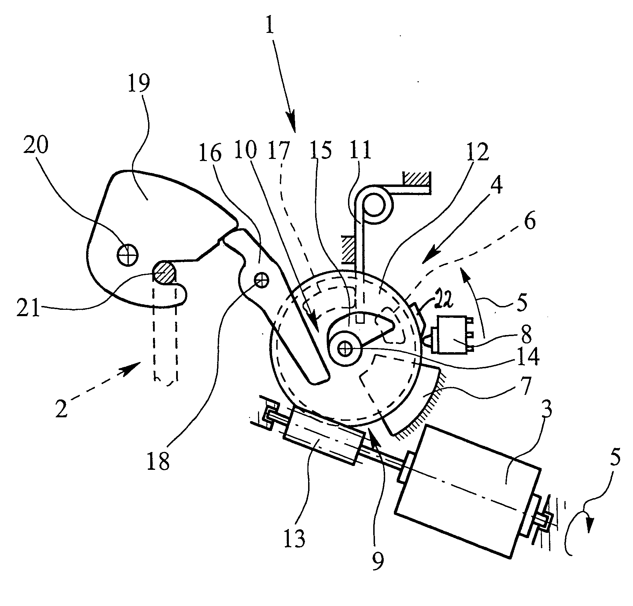

Weitere Vorteile, Merkmale, Eigenschaften und Aspekte der vorliegenden Erfindung ergeben sich aus der folgenden Beschreibung einer bevorzugten Ausfiihrungsform anhand der Zeichnung. Die einzige Figur zeigt
eine schematische Darstellung einer vorschlagsgemäßen Aktuatoreinrichtung für eine Sicherheitseinrichtung eines Kraftfahrzeugs.

Die Figur zeigt eine vorschlagsgemäße Aktuatoreinrichtung 1 zur insbesondere einmaligen oder notfallbedingten Auslösung einer Sicherheitseinrichtung 2 eines nicht dargestellten Kraftfahrzeugs. Bei der Aktuatoreinrichtung 1 handelt es sich insbesondere um einen Kraftverschluß im eingangs genannten Sinne.

Als Notfall, bei dem eine Auslösung der Sicherheitseinrichtung 2 erfolgt, ist insbesondere ein Unfall des Kraftfahrzeugs anzusehen. Jedoch kann es auch sonstige Fahrsituationen oder Notfälle geben, in denen eine Auslösung der Sicherheitseinrichtung 2 erfolgen soll, so daß nachfolgend immer nur von einem Notfall gesprochen wird.

Bei der Sicherheitseinrichtung 2 handelt es sich insbesondere um einen verlagerbaren Überrollbügel, eine verlagerbare Kopfstütze, ein verlagerbares Kniepolster, eine verlagerbare Motorhaube, ein verlagerbares Lenkrad oder dgl., vorzugsweise im eingangs genannten Sinne.

Die Aktuatoreinrichtung 1 weist einen Aktuator 3 und vorzugsweise ein zugeordnetes Getriebe 4 auf. Zur Auslösung der Sicherheitseinrichtung 2 ist der Aktuator 3 in einer Auslöserichtung 5 betreibbar bzw. betätigbar.

Der Aktuator 3 arbeitet vorzugsweise elektrisch und ist insbesondere als Elektromotor ausgebildet. Bedarfsweise kann es sich um einen Linearantrieb bzw.-motor oder einen Elektromagneten handeln. Vorzugsweise handelt es sich jedoch um einen Drehbewegungen erzeugenden Motor.

Vorschlagsgemäß ist vorgesehen, daß in einem Funktionstest der Aktuator 3 zur Überprüfung seiner Funktionsfähigkeit ohne Auslösung der Sicherheitseinrichtung 2 betrieben bzw. betätigt wird.

Vorzugsweise wird der Aktuator 3 beim Funktionstest entgegen der Auslösrichtung 5 betrieben, bis Anschläge 6, 7 der Aktuatoreinrichtung 1 eine weitere Bewegung begrenzen und/oder eine Sensoreinrichtung 8, beispielsweise mit einem Hall-Sensor oder Mikroschalter, erfaßt hat, daß eine hier rückwärtige Betätigung oder Bewegung durch den Aktuator 3 erfolgt ist, der Aktuator 3 also funktioniert.

Anschließend erfolgt vorzugsweise eine Rückstellung des Aktuators 3 und/oder des Getriebes 4 in eine Ausgangslage, insbesondere selbsttätig durch Federkraft, also nach Abschalten des Aktuators 3.

Vorzugsweise wird der Aktuator 3 beim Rückstellen kurzgeschlossen. Bedarfsweise kann hierbei der vom Aktuator 3 erzeugte Generatorstrom bzw. der Kurzschlußstrom erfaßt und hinsichtlich der Funktionsfähigkeit des Aktuators 3 ausgewertet werden.

Alternativ oder zusätzlich kann der Aktuatorstrom beim Betreiben des Aktuators 3 während des Funktionstests - also bei eingeschaltetem Aktuator 3 - und/oder beim Erreichen von Bewegungsbegrenzungen, wie Auflaufen der Anschläge 6, 7, erfaßt und hinsichtlich der Funktionsfähigkeit und/oder Abschaltung des Aktuators 3 ausgewertet werden.

Alternativ oder zusätzlich kann der Aktuator 3 beim Funktionstest auch in Auslöserichtung 5 betrieben werden, sofern das Getriebe 4 bzw. die Auslösemechanik genügend Spiel aufweist und/oder sofern der Aktuator 3 und/oder das Getriebe 4, insbesondere mittels einer nicht dargestellten Kupplung, derart entkoppelbar ist bzw. sind, so daß keine ungewollte Auslösung der Sicherheitseinrichtung 2 während des Funktionstests erfolgt.

Das Getriebe 4 weist vorzugsweise ein Schneckengetriebe 9 und/oder eine Exzenter/Hebel-Kombination 10 auf.

Das Schneckengetriebe 9 ist vorzugsweise nicht selbsthemmend ausgebildet. Das Schneckengetriebe 9 weist vorzugsweise ein Untersetzungsverhältnis von höchstens 30:1, insbesondere höchstens 25:1 und ganz bevorzugt von 20:1 oder weniger auf.

Eine Rückstellfeder 11 ist einem Schneckenrad 12 zugeordnet, das vom Aktuator 3 mittels einer Schnecke 13 antreibbar ist. Bedarfsweise ist die Rückstellfeder 11 auf der Achse 14 des Schneckenrads 12 des Schneckengetriebes 9 angeordnet. Dies ermöglicht einen besonders kompakten Aufbau.

Wenn die Rückstellfeder 11 auf der Achse 14 des Schneckenrads 12 angeordnet wird, kann eine Relativbewegung zwischen Federschenkel und Schneckenrad 12 vermieden werden. Dies erhöht die Leichtgängigkeit der Mechanik und verringert die Abnutzung.

Beim Darstellungsbeispiel weist das Schneckenrad 12 ein nockenförmiges oder spiralförmiges Stellelement 15 zur Betätigung eines zugeordneten Hebels, insbesondere einer Sperrklinke 16, auf. So ist die Sperrklinke 16 in Abhängigkeit von der Drehlage des Schneckenrads 11 bzw. bei Drehen des Schneckenrads 12 in Auslöserichtung 5 durch das mit der Sperrklinke 16 in Eingriff tretende oder stehende Stellelement 15 öffenbar. Vorzugsweise ist hierbei ein relativ großes Untersetzungsverhältnis vorgesehen. Insbesondere beträgt das Verhältnis der Untersetzung der Drehbewegung des Schneckenrads 12 zur Betätigung des Hebels bzw. der Sperrklinke 16 mindestens 10:1, besonders bevorzugt 15:1 oder mehr.

Beim Drehen des Schneckenrads 12 in Auslöserichtung 5 läuft ein am Schnekkenrad 12 angebrachter, weiterer Vorsprung oder Nocken 17 auf den stationären, gehäuseseitigen Anschlag 7 der Aktuatoreinrichtung 1 auf, so daß das Schnekkenrad 12 gegen ein weiteres Verdrehen in Auslöserichtung 5 blockiert wird. Somit ist die Endlage bzw. Öffnungslage des Schneckenrads 12 festgelegt.

Wie bereits erwähnt, ist die Endlage des Schneckenrads 12 beim Drehen entgegen der Auslöserichtung 5, also beim Funktionstest, durch den dann beim Darstellungsbeispiel ebenfalls am festen Anschlag 7 auflaufenden bzw. anschlagenden Anschlag 6 festgelegt.

Beim Darstellungsbeispiel bilden die Anschläge 6 und 17 zusätzlich einen radialen Eingriffsbereich für die Rückstellfeder 11. Hier sind jedoch auch andere konstruktive Lösungen möglich.

Beim Öffnen wird die Sperrklinke 16 beim Darstellungsbeispiel mit dem Uhrzeigersinn um die Achse 18 verschwenkt. Die Sperrklinke 16 gibt dann einen zugeordneten Drehriegel 19 frei, so daß dieser um eine Lagerachse 20 verschwenken und ein im verriegelten bzw. gesperrten Zustand gehaltenes Betätigungselement 21 der Sicherheitseinrichtung 2 freigeben kann. Durch diese Freigabe erfolgt also die Auslösung der Sicherheitseinrichtung 2.

Die Sperrklinke 16 ist vorzugsweise mittels einer nicht dargestellten Feder in die den Drehriegel 19 und damit die Auslösung der Sicherheitseinrichtung 2 blockierende Sperrstellung vorgespannt; beim Darstellungsbeispiel also entgegen des Uhrzeigersinns.

Um ein ungewolltes Entsperren oder Entriegeln der Drehfalle bzw. des Drehriegels 19 und damit ein ungewolltes Auslösen der Sicherheitseinrichtung 2 zu verhindern, kann die Sperrklinke 16 durch einen insbesondere am Schneckenrad 12 angebrachten, nicht dargestellten Vorsprung oder dgl. in der Sperrstellung blokkiert sein, wenn sich das Getriebe 4 oder zumindest das Schneckenrad 12 in der Ausgangslage, also einer Lage ungewollter Betätigung befindet.

Das Getriebe 4 weist vorzugsweise mindestens zwei Getriebestufen auf, wobei die Rückstellfeder 11 vorzugsweise zwischen der ersten und zweiten Getriebestufe oder unmittelbar am Aktuator 3 angreift, um eine sichere Rückstellung gewährleisten zu können. Bei nur einer Getriebestufe greift die Rückstellfeder 11 entsprechend vorzugsweise unmittelbar am Aktuator 3 bzw. dessen Abtrieb an.

Die vorgesehene Rückstellung in die Ausgangslage hat den Vorteil, daß die Ausgangsposition bei einer Auslösung relativ genau bestimmt ist, so daß definierte und insbesondere auch kurze Betätigungs- bzw. Auslösezeiten erreichbar sind.

Beim Darstellungsbeispiel bildet das Schneckengetriebe 9 eine erste Getriebestufe und die Nocken/Hebel-Kombination 10 bzw. das Stellelement 15 mit der Sperrklinke 16 eine zweite Getriebestufe.

Bei zwei Getriebestufen beträgt das Untersetzungsverhältnis der abtriebsseitigen Getriebestufe vorzugsweise mindestens das 0,5-fache, insbesondere mindestens das 0,8-fache, ganz besonders bevorzugt mindestens das 1,0-fache der anderen Getriebestufe.

Wie bereits erwähnt ist der Aktuator 3, wenn das Schneckenrad 12 am Anschlag 7 anschlägt, vorzugsweise in Abhängigkeit vom Aktuatorstrom abschaltbar.

Alternativ oder zusätzlich kann der Aktuator 3 auch zeitabhängig, insbesondere nach Ablauf einer vorgebbaren Zeitdauer, abschaltbar sein. Dies ist insbesondere für den Fall sinnvoll, daß der Funktionstest durchgeführt wird und der Aktuator 3 nicht funktioniert. Bei einem derartigen Ausfall oder bei einem sonstigen Ausfall wird dem Fahrzeugnutzer eine entsprechende Warnung oder Fehlermeldung angezeigt.

Ein Mikroschalter hat den Vorteil, daß er kostengünstig ist und eine einfache Steuerung ermöglicht. Ein Hall-Sensor hat den Vorteil hoher Zuverlässigkeit.

Beim Darstellungsbeispiel weist die Sensoreinrichtung 8 vorzugsweise einen Mikroschalter auf. Beim Funktionstest kann der Mikroschalter beispielsweise von einem am Schneckenrad 12 zusätzlich angebrachten Vorsprung 22 oder dgl. betätigt werden. Dadurch kann die Sensoreinrichtung 8 erfassen, wenn der Aktuator 3 beim Funktionstest entgegen der Auslöserichtung 5 arbeitet und das Getriebe 4 bzw. Schneckenrad 12 entgegen der Auslöserichtung 5 bewegt hat.

Unmittelbar dann, bedarfsweise also vor Auflaufen des Anschlags 6 auf den Anschlag 7, kann dann der Aktuator 3 abgeschaltet werden. Anschließend werden das Schneckenrad 12 und über das vorzugsweise nicht selbst hemmende Schneckengetriebe 9 auch der Aktuator 3 von der Rückstellfeder 11 wieder in die Ausgangslage rückgestellt.

Beim Funktionstest führt der Aktuator 3 vorzugsweise mindestens eine vollständige Drehung aus, um einen gleichmäßigen Bürstenabrieb und/oder eine gleichmäßige Abnutzung sicherzustellen. Insbesondere führt der Aktuator 3 während des Funktionstests sogar mehrere Umdrehungen aus.

Vorzugsweise wird der Funktionstest regelmäßig und/oder selbsttätig ausgeführt, beispielsweise nach mehrfachem Öffnen, Starten oder Verriegeln des Kraftfahrzeugs, beispielsweise nach dem 10. oder 20. Mal oder dem x-ten Mal, wobei x eine vorgebbare oder feste Zahl ist.

Besonders bevorzugt wird der Funktionstest beim Abschließen bzw. Verriegeln des Kraftfahrzeugs durchgeführt. In diesem Fall merkt bzw. hört ein Fahrzeugbenutzer nicht, wenn der Funktionstest durchgeführt wird. Insbesondere werden hierbei die während des Funktionstests verursachten Geräusche von den beim Verriegeln auftretenden Geräuschen übertönt bzw. überdeckt.

Der Aktuatoreinrichtung 1 ist vorzugsweise eine nicht dargestellte Steuereinrichtung bzw. Elektronik zugeordnet, um eine entsprechende Ansteuerung und Auswertung bzw. Feststellung der Funktionsfähigkeit und bedarfsweise auch eine Auslösung der Sicherheitseinrichtung 2 bei einem Notfall zu ermöglichen.

Die Aktuatoreinrichtung 1 ist vorzugsweise derart ausgebildet, daß nach einer Auslösung eine neue Verriegelung bei Zurückbewegen bzw. Zurückdrehen des Aktuators 3 und des Getriebes 4, also insbesondere des Schneckenrads 12, in die Ausgangslage möglich ist. So ist ein neues Verriegeln insbesondere nur in einer Werkstatt möglich, beispielsweise wenn das Zurückbewegen manuell erfolgt.

Wie bereits erwähnt, erfolgt vorzugsweise eine elektronische Auswertung bzw. Rückmeldung, ob der Aktuator 3 funktionsfähig ist. Insbesondere erfolgt die Erfassung der Funktionsfähigkeit beim Funktionstest mittels der Sensoreinrichtung 8.

Jedoch ist nicht unbedingt eine Sensoreinrichtung 8 erforderlich. Wie bereits erwähnt, kann beispielsweise durch entsprechende Auswertung des Aktuatorstroms auch die Funktionsfähigkeit des Aktuators 3 festgestellt werden.

Die nicht selbsthemmende Ausführung des Getriebes 4 oder zumindest des beim Darstellungsbeispiel vorgesehenen Schneckengetriebes 9 ermöglicht ein Rückstellen des Getriebes 4 bzw. Schneckengetriebes 9 und des Aktuators 3 durch Federkraft, hier durch die Rückstellfeder 11.

Durch die vorzugsweise hohe Untersetzung an der zweiten Getriebestufe, also an der Kontur des Stellelements 15, die auf die Sperrklinke 16 wirkt, wird die Verwendung einer verhältnismäßig geringen Untersetzung beim Schneckengetriebe 9 ermöglicht. Dies ist einem besseren Wirkungsgrad in Auslöserichtung 5 und entgegen der Auslöserichtung 5 zuträglich.

Wenn das Getriebe 4 bzw. der Aktuator 3 im sogenannten Blockbetrieb - also Einschalten bis Erreichen des Anschlags 7 - eingesetzt wird, ergibt sich ein geringer Steuerungsaufwand.

Das vorgesehene Kurzschließen des Aktuators 3 beim Rückstellen führt zu einer genaueren Erreichung der Ausgangslage.

Zusätzlich kann eine nicht dargestellte Verrastung des Getriebes 4 bzw. des Schneckenrads 12 in der Null- bzw. Ausgangslage, beispielsweise durch einen peripher eingreifenden Rastzahn oder dgl., vorgesehen sein. So wird die Ausgangslage wesentlich genauer erreicht und auch gehalten, auch bei Vibrationen des Kraftfahrzeugs.

Wenn die Sperrklinke 16 in Ihrer Sperrstellung von dem in der Ausgangslage befindlichen Schneckenrad 12 oder einem sonstigen Getriebeteil blockiert wird, kann die nicht dargestellte Sperrklinkenfeder weniger stark ausgebildet sein.

Die Sicherheitseinrichtung 2 weist vorzugsweise einen nicht dargestellten Federspeicher auf, der nach Freigabe des Betätigungselements 21 die Sicherheitseinrichtung 2 ihre Sicherheitsfunktion ausüben läßt, insbesondere die vorgesehene Verlagerung eines Kraftfahrzeugteils zum Schutz von Insassen oder außen am Kraftfahrzeug befindlichen Personen bewirkt.

Vorzugsweise ist das Kraftfahrzeugteil eine Kopfstütze, ein Polster, ein Sitz, ein Lenkrad, ein Schutznetz, ein Überrollbügel, ein Schloß, eine Haube, eine Klappe oder ein Teil davon.

## Patentansprüche

1. Aktuatoreinrichtung (1) zur insbesondere einmaligen oder notfallbedingten Auslösung einer Sicherheitseinrichtung (2) eines Kraftfahrzeugs, mit einem Aktuator (3) und vorzugsweise einem Getriebe (4), wobei der Aktuator (3) in einer Auslöserichtung (5) zur Auslösung der Sicherheitseinrichtung (2) betreibbar ist,
**dadurch gekennzeichnet,**
**daß** die Aktuatoreinrichtung (1) derart ausgebildet ist, daß in einem Funktionstest der Aktuator (3) zur Überprüfung seiner Funktionsfähigkeit ohne Auslösung der Sicherheitseinrichtung (2) betreibbar ist.

2. Aktuatoreinrichtung nach Anspruch 1, **dadurch gekennzeichnet, daß** der Aktuator (3) elektrisch arbeitet, insbesondere als Elektromotor ausgebildet ist.

3. Aktuatoreinrichtung nach Anspruch 1 oder 2, **dadurch gekennzeichnet, daß** der Aktuator (3) als Linearantrieb oder -motor ausgebildet ist.

4. Aktuatoreinrichtung nach einem der voranstehenden Ansprüche, **dadurch gekennzeichnet, daß** der Aktuator (3) elektrisch steuerbar ist.

5. Aktuatoreinrichtung nach einem der voranstehenden Ansprüche, **dadurch gekennzeichnet, daß** der Aktuator (3) beim Funktionstest entgegen der Auslöserichtung (5) betreibbar ist.

6. Aktuatoreinrichtung nach einem der voranstehenden Ansprüche, **dadurch gekennzeichnet, daß** der Aktuator (3) und/oder das Getriebe (4) ein vorbestimmtes Spiel zur Auslösung der Sicherheitseinrichtung (2) aufweist bzw. aufweisen und/oder der Aktuator (3) beim Funktionstest von der Sicherheitseinrichtung (2) entkoppelbar ist, insbesondere so daß der Aktuator (3) beim Funktionstest in Auslöserichtung (5) betreibbar ist.

7. Aktuatoreinrichtung nach einem der voranstehenden Ansprüche, **dadurch gekennzeichnet, daß** der Aktuator (3) beim Funktionstest gegen Federkraft und/oder einen Anschlag (7, 8) betreibbar ist.

8. Aktuatoreinrichtung nach einem der voranstehenden Ansprüche, **dadurch gekennzeichnet, daß** beim Funktionstest der Aktuatorstrom zur Überprüfung der Funktionsfähigkeit des Aktuators (3) erfaßbar und auswertbar ist.

9. Aktuatoreinrichtung nach einem der voranstehenden Ansprüche, **dadurch gekennzeichnet, daß** der Aktuator (3) und/oder das Getriebe (4) nach oder beim Funktionstest und/oder nach Abschaltung des Aktuators (3) insbesondere durch Federkraft wieder in eine Ausgangslage rückstellbar ist bzw. sind, vorzugsweise, daß die Ausgangslage rastend einnehmbar ist, und/oder, vorzugsweise, daß der Aktuator (3) während der Rückstellung in die Ausgangslage kurzschließbar ist, insbesondere wobei der Generator- bzw. Kurzschlußstrom des Aktuators (3) während der Rückstellung vorzugsweise zur Überprüfung der Funktionsfähigkeit des Aktuators (3) erfaßbar und auswertbar ist.

10. Aktuatoreinrichtung nach einem der voranstehenden Ansprüche, **dadurch gekennzeichnet, daß** der Aktuator (3) beim Funktionstest für mindestens eine volle Umdrehung betreibbar ist.

11. Aktuatoreinrichtung nach einem der voranstehenden Ansprüche, **dadurch gekennzeichnet, daß** die Aktuatoreinrichtung (1) eine Sensoreinrichtung (8) zur Erfassung einer Lage und/oder Bewegung des Aktuators (3) und/oder des Getriebes (4) aufweist.

12. Aktuatoreinrichtung nach einem der voranstehenden Ansprüche, **dadurch gekennzeichnet, daß** der Aktuator (3) beim Funktionstest betreibbar ist, bis seine Funktionsfähigkeit und/oder ein Erreichen einer Testlage, insbesondere mittels einer Sensoreinrichtung (8), detektierbar ist bzw. sind.

13. Aktuatoreinrichtung nach Anspruch 11 oder 12, **dadurch gekennzeichnet, daß** die Sensoreinrichtung (8) einen Mikroschalter und/oder einen Hall-Sensor aufweist.

14. Aktuatoreinrichtung nach einem der voranstehenden Ansprüche, **dadurch gekennzeichnet, daß** das Getriebe (4) nicht selbsthemmend ausgebildet ist.

15. Aktuatoreinrichtung nach einem der voranstehenden Ansprüche, **dadurch gekennzeichnet, daß** das Getriebe (4) ein Schneckengetriebe (9) und/oder eine Exzenter/Hebel-Kombination (10) aufweist, vorzugsweise, daß das Schneckengetriebe (9) nicht selbsthemmend ausgebildet ist, und/oder, vorzugsweise, daß das Schneckengetriebe (9) ein Untersetzungsverhältnis von höchstens 30:1, vorzugsweise höchstens 25:1, insbesondere 20:1 oder weniger, aufweist, und/oder, vorzugsweise, daß eine Rückstellfeder (11) dem Schneckenrad (12) zugeordnet, insbesondere auf dessen Achse (14) angeordnet, ist

16. Aktuatoreinrichtung nach Anspruch 15, **dadurch gekennzeichnet, daß** das Schneckenrad (12) ein nockenförmiges oder spiralförmiges Stellelement (15) zur Betätigung eines zugeordneten Hebels, insbesondere einer Sperrklinke (16), aufweist, insbesondere wobei das Verhältnis der Untersetzung der Drehbewegung des Schneckenrads (12) in eine Betätigung des Hebels bzw. der Sperrklinke (16) groß ist, vorzugsweise mindestens 10:1, insbesondere 15:1 oder mehr beträgt.

17. Aktuatoreinrichtung nach Anspruch 15 oder 16, **dadurch gekennzeichnet, daß** das Schneckenrad (12) einen Vorsprung aufweist, der einen zugeordneten Hebel, insbesondere eine Sperrklinke (16), in einer die Auslösung der Sicherheitseinrichtung (2) blockierenden Sperrstellung blockiert, wenn sich das Getriebe (4) oder zumindest das Schneckenrad (12) in einer Ausgangslage befindet.

18. Aktuatoreinrichtung nach einem der voranstehenden Ansprüche, **dadurch gekennzeichnet, daß** die Aktuatoreinrichtung (1) eine Sperrklinke (16) und einen zugeordneten Riegel, insbesondere einen Drehriegel (19), für ein Betätigungselement (21) der Sicherheitseinrichtung (2) aufweist, insbesondere wobei die Sperrklinke (16) ein Öffnen bzw. Drehen des Drehriegels (19) zur Auslösung der Sicherheitseinrichtung (2) in einer Sperrstellung blockiert, vorzugsweise, daß die Sperrklinke (16) vom Aktuator (3) unmittelbar oder mittelbar mittels des Getriebes (4) betätigbar, insbesondere aushebbar ist.

19. Aktuatoreinrichtung nach einem der voranstehenden Ansprüche, **dadurch gekennzeichnet, daß** das Getriebe (4) mindestens zwei Getriebestufen aufweist, vorzugsweise, daß das Untersetzungsverhältnis der abtriebsseitigen Getriebestufe mindestens das 0,5-fache, vorzugsweise mindestens das 0,8-fache, insbesondere mindestens das 1,0-fache, der anderen Getriebestufe beträgt.

20. Aktuatoreinrichtung nach einem der voranstehenden Ansprüche, **dadurch gekennzeichnet, daß** der Aktuator (3) und/oder das Getriebe (4) bei der Auslösung und/oder beim Funktionstest vorzugsweise in beiden Betriebsrichtungen gegen einen oder mehrere Anschläge (7) betreibbar ist bzw. sind.

21. Aktuatoreinrichtung nach einem der voranstehenden Ansprüche, **dadurch gekennzeichnet, daß** der Aktuator (3) bei Erreichen eines Anschlags (7) in Abhängigkeit vom Aktuatorstrom abschaltbar ist, und/oder, daß der Aktuator (7) zeitabhängig abschaltbar ist.

22. Aktuatoreinrichtung nach einem der voranstehenden Ansprüche, **dadurch gekennzeichnet, daß** der Funktionstest regelmäßig und/oder selbsttätig ausführbar ist, beispielsweise nach dem x-ten Mal des Öffnens, Startens oder Verriegelns des Kraftfahrzeugs, wobei x eine vorgebbare oder feste Zahl ist.

23. Aktuatoreinrichtung nach einem der voranstehenden Ansprüche, **dadurch gekennzeichnet, daß** die Aktuatoreinrichtung (1) als Kraftverschluß ausgebildet ist.

24. Sicherheitseinrichtung (2) mit einer zugeordneten Aktuatoreinrichtung (1) zur Auslösung der Sicherheitseinrichtung (2),
**dadurch gekennzeichnet,**
**daß** die Aktuatoreinrichtung (1) gemäß einem der voranstehenden Ansprüche ausgebildet ist.

25. Sicherheitseinrichtung nach Anspruch 24, **dadurch gekennzeichnet, daß** die Sicherheitseinrichtung (2) ein von der Aktuatoreinrichtung (1) zur Auslösung freigebbares Betätigungselement (21) aufweist.

26. Sicherheitseinrichtung nach Anspruch 24 oder 25, **dadurch gekennzeichnet, daß** die Sicherheitseinrichtung (2) einen Federspeicher zur Verlagerung eines Kraftfahrzeugteils bei Auslösung der Sicherheitseinrichtung (2) aufweist, vorzugsweise, daß das Kraftfahrzeugteil eine Kopfstütze, ein Polster, ein Sitz, ein Lenkrad, ein Schutznetz, ein Überrollbügel, ein Schloß, eine Haube oder eine Klappe ist.

27. Sicherheitseinrichtung nach einem der Ansprüche 24 bis 26, **dadurch gekennzeichnet, daß** die Sicherheitseinrichtung (2) und die Aktuatoreinrichtung (1) eine Baugruppe oder Baueinheit bilden.

28. Sicherheitseinrichtung nach einem der Ansprüche 24 bis 26, **dadurch gekennzeichnet, daß** die Aktuatoreinrichtung (1) auswechselbar an der Sicherheitseinrichtung (2) befestigt ist.

29. Sicherheitseinrichtung nach einem der Ansprüche 24 bis 28, **dadurch gekennzeichnet, daß** die Sicherheitseinrichtung (2) nur einmalig auslösbar ist, oder, daß die Sicherheitseinrichtung (2) nach der Auslösung wieder in einen erneut auslösbaren Zustand, insbesondere manuell, bringbar ist, insbesondere durch Einrasten oder Sichern des Betätigungselements (21) an der Aktuatoreinrichtung (1).

30. Verfahren zur Überprüfung der Funktionsfähigkeit eines Aktuators einer insbesondere gemäß einem der Ansprüche 1 bis 23 ausgebildeten Aktuatoreinrichtung zur Auslösung einer insbesondere gemäß einem der Ansprüche 24 bis 29 ausgebildeten Sicherheitseinrichtung eines Kraftfahrzeugs,
**dadurch gekennzeichnet,**
**daß** in einem Funktionstest der Aktuator zur Überprüfung seiner Funktionsfähigkeit betrieben wird, ohne die Sicherheitseinrichtung auszulösen.

31. Verfahren nach Anspruch 30, **dadurch gekennzeichnet, daß** der Funktionstest regelmäßig und/oder selbsttätig durchgeführt wird, vorzugsweise, daß der Funktionstest während des Öffnens, Startens und/oder Verriegelns des Kraftfahrzeugs ausgeführt wird, weiter vorzugsweise daß der Funktionstest nach dem x-ten Mal des Öffnens, Startens und/oder Verriegelns des Kraftfahrzeugs ausgeführt wird, insbesondere wobei x eine vorgebbare oder feste Zahl ist.

32. Verfahren nach Anspruch 30 oder 31, **dadurch gekennzeichnet, daß** der Funktionstest nur bei Stillstand des Kraftfahrzeugs durchführbar ist.

33. Verfahren nach einem der Ansprüche 30 bis 32, **dadurch gekennzeichnet, daß** der Aktuator beim Funktionstest entgegen der Auslöserichtung betrieben wird.

34. Verfahren nach einem der Ansprüche 30 bis 33, **dadurch gekennzeichnet, daß** beim Funktionstest der Aktuator eingeschaltet wird, bis eine Betätigung oder Bewegung eines zugeordneten Übertragungselements, wie eines Schneckenrads, detektiert und/oder eine vorbestimmte Zeitdauer überschritten und/oder ein Anschlagen, insbesondere eines Übertragungselements, an einer Bewegungsbegrenzung detektiert wird bzw. werden.

35. Verfahren nach einem der Ansprüche 30 bis 34, **dadurch gekennzeichnet, daß** beim Funktionstest die Funktionsfähigkeit des Aktuators festgestellt wird, wenn nach dem Einschalten des Aktuators - insbesondere entgegen der Auslöserichtung - eine Betätigung oder Bewegung eines zugeordneten Übertragungselements, wie eines Schneckenrads, und/oder ein entsprechender Stromaufnahmeverlauf und/oder ein Anschlagen, insbesondere eines Übertragungselements, an einer Bewegungsbegrenzung detektiert wird bzw. werden.

36. Verfahren nach einem der Ansprüche 30 bis 35, **dadurch gekennzeichnet, daß** beim Funktionstest nach dem Abschalten des Aktuators ein zugeordnetes Getriebe und/oder der Aktuator in eine Ausgangslage - insbesondere mittels Federkraft - rückgestellt wird bzw. werden.

37. Verfahren nach einem der Ansprüche 30 bis 36, **dadurch gekennzeichnet, daß** der Aktuator und/oder ein zugeordnetes Getriebe nach dem Auslösen zunächst mittels des Aktuators zur erneuten Sicherung oder Sperrung einer Auslösung in eine Ausgangslage rückgestellt wird bzw. werden, oder, daß die Sicherheitseinrichtung nur einmalig ausgelöst wird.
